Europäisches Patentamt

European Patent Office

Office européen des brevets

(19)

(11) **EP 1 381 148 A2**

(12) **EUROPÄISCHE PATENTANMELDUNG**

(43) Veröffentlichungstag:
**14.01.2004 Patentblatt 2004/03**

(51) Int Cl.⁷: **H02P 6/16**

(21) Anmeldenummer: **03005094.2**

(22) Anmeldetag: **07.03.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **11.07.2002 DE 10231450**

(71) Anmelder: **ROBERT BOSCH GMBH
70442 Stuttgart (DE)**

(72) Erfinder:
• **Krueger, Hartmut
77830 Buehlertal (DE)**
• **Bolz, Martin-Peter
77815 Buehl (DE)**
• **Wegner, Norbert
77815 Buehl (DE)**

(54) **Hochauflösende Drehwinkelsensorik für Gleichstrommotoren**

(57)     Die Erfindung bezieht sich auf ein Verfahren zur Verfahren zur Bestimmung der Drehzahl und des Drehwinkels einer Getriebe-Antriebseinheit (1). Diese umfaßt einen Gleichstrommotor (2), welcher ein Antriebselement (15) antreibt, das mit einem Abtriebselement (19) zusammenwirkt sowie eine Signalauswertung (45). Mit einem Sensorelement 25, welchem einem magnetisierbarer Bereich (24) am Abtriebselement (19) zugeordnet ist, wird eine Winkelinformation des Abtriebselementes (19) ermittelt. Aus einer Bestimmung von Übergängen zwischen Kommutierungsbereichen (13.1, 13.2, 13.3) eines Kommutators (10) des Gleichstrommotors (2) werden periodische Schwankungen des Motorstromes I (42) vor einer Getriebeübersetzung aus Antriebselement (15) und Abtriebselement (19) erfaßt. Ein der Winkelinformation des Abtriebselementes (19) entsprechendes Signal des Sensorelementes (25) wird mit einem aus den Übergängen der Kommutierungsbereiche (13.1, 13.2, 13.2) gewonnenen, die Winkellage der Antriebswelle (3) erfassenden Signal gekoppelt.

Fig. 2

EP 1 381 148 A2

**Beschreibung**

Technisches Gebiet

Zur Verstellung von Ausstattungsteilen, wie beispielsweise Fensterscheiben, Schiebedächer und Autositze sowie zum Betrieb von Scheibenwischanlagen in Kraftfahrzeugen werden in zunehmendem Maße elektromotorische Antriebe (DC-Motoren = Gleichstrommotoren) eingesetzt. Durch die damit verbundene selbsttätige und vom Benutzer nicht unmittelbar beeinflußbare Bewegung der Stellteile durch den Antrieb ist die Gefahr, daß das Stellteil einen Gegenstand oder ein Körperteil an einem Endanschlag einklemmt, im Vergleich zu manuellen Antrieben vergrößert. Moderne elektromotorische Antriebe sind deshalb mit Schutzmechanismen versehen, die das Stellteil im Einklemmfall stoppen oder reversieren.

Der Einklemmfall wird üblicherweise indirekt, durch Erfassung und Auswertung des Bewegungswegsverhaltens des Stellteils detektiert. Hierbei wird die Position des Stellteils über die Messung des Winkels der Antriebseinheit bestimmt. Je höher die Meßgenauigkeit ist, desto genauer ist auch die Bestimmung der Position des Stellteils. Aus Komfortgründen haben Stellteile wie automatisch betätigbare Fensterscheiben in modernen Kraftfahrzeugen beträchtliche Geschwindigkeiten, so daß die Detektion darüber hinaus sehr schnell erfolgen muß.

Weitere Faktoren, die im Zusammenhang mit dem Bau solcher Motoren bzw. der dazugehörigen Sensorik wichtig sind, sind das Bauvolumen und das Gewicht sowie die Zuverlässigkeit und die Möglichkeit der kostengünstigen Fertigung.

Stand der Technik

Eine Getriebe-Antriebseinheit mit Drehzahlerfassung ist bereits bekannt. Hierbei weist die Getriebe-Antriebseinheit ein Antriebsrad, ein Abtriebsrad und ein Sensorrad auf, wobei das Antriebsrad mit dem Abtriebsrad kämmt, und das Sensorrad mit dem Antriebsrad oder Abtriebsrad kämmt. Das Antriebs- oder Abtriebsrad kann gleichzeitig als Sensorrad ausgebildet sein. In jedem Fall weist das Sensorrad einen Positionsgeber auf, der mit einem Sensor zum Erfassen der Drehzahl oder der Rotationsgeschwindigkeit zusammenwirkt. Das Sensorrad kann als Stirnzahnrad, insbesondere als Schneckenrad, ausgeführt sein. Je nach gewünschter Empfindlichkeit der Drehzahlsensorik kann dabei die Übersetzung zum Sensorrad entsprechend gewählt werden (Anzahl der Zähne). Als Positionsgeber wird beispielsweise ein Magnet, insbesondere ein zweipoliger Magnet, verwendet. Es können sowohl induktive, optische als auch magnetische Sensoren verwendet werden. Besonders kostengünstig und einfach in der Handhabung sind Hall-Sensoren, bei denen jedoch keine hochauflösende Drehzahlerfassung möglich ist. Für hochgenaue Absolut-Winkel-Meßsysteme werden magnetoresistive Sensoren eingesetzt. Nachteilig ist hier, dass bei langsamen Geschwindigkeiten eine sehr hohe Auflösung des A/D-Wandlers (Analog-/Digital-Wandlers) nötig ist, um eine gute Drehzahlbestimmung zu erlauben.

Die EP-A 0 865 148 offenbart ebenfalls eine Motor-Getriebe-Antriebseinheit zum Verstellen von Ausstattungsteilen von Kraftfahrzeugen mit einem Kommutatormotor. Dabei enthält ein im wesentlichen topfförmiges Motorgehäuse einen Motoranker mit einer aus dem Motorgehäuse verlängerten Ankerwelle. Zwischen dem Motorgehäuse und dem Getriebegehäuse wird die Ankerwelle mit einem Kalottenlager gelagert. Zwischen dem Motoranker und dem Kalottenlager ist auf der Ankerwelle ein Kollektor und ein Ringmagnet angeordnet. Der Ringmagnet ist in seinem äußeren Umfang abwechselnd in Nord- und Südrichtung magnetisiert. Das sich ändernde Magnetfeld wird von zwei 90° versetzt zueinander angeordneten Hall-Sensoren erfaßt und von einer auf einer Elektronikplatine angeordneten Steuerelektronik ausgewertet. Dabei ragt die Elektronikplatine in das Motorgehäuse bis zur unmittelbaren Nähe des Ringmagneten hinein. Diese Anordnung der Elektronikplatine innerhalb des Motorgehäuses oder im Bereich des Bürstenhalters ist sehr umständlich und unflexibel. Außerdem verursacht das Bürstenfeuer Störungen bei der Drehzahlsensorik.

Die DE-A 198 00 194 beschreibt einen elektromotorischen Antrieb für Stellteile in Kraftfahrzeugen. Hierbei besteht der Antrieb aus einer in ein Getriebe eingreifenden Motorankerwelle, die getriebeseitig eine Getriebeschnecke aufweist, welche wiederum mit einem Schneckenrad in Eingriff steht. Die Drehzahl und daraus die Position des durch den Elektromotor angetriebenen Stellteils wird durch Erfassung und Auswertung von enkrementellen Hall- oder Magnetsensorsignalen bestimmt. Als Positionsgeber wird hierbei ein Ringmagnet eingesetzt, der auf der Motorankerwelle angeordnet ist. Die Bewegungsrichtung des Antriebs kann durch Einsatz von zwei Sensoren bestimmt werden. Zusätzlich oder alternativ wird der durch den Elektromotor fließende Strom ausgewertet ("Ripple Count"). Außerdem ist die Getriebeschnecke in Richtung der Drehachse der Motorankerwelle in wenigstens einer Axialrichtung bzw. Umfangsrichtung gegen eine Kraft F beweglich und in Drehrichtung bzw. Axialrichtung der Motorankerwelle drehfest bzw. verschiebfest an der Motorankerwelle angeordnet. Dies sorgt für eine weitere Verbesserung des Einklemmschutzes, da die Gesamtfederrate des Antriebs verringert ist. Die axiale Verschiebung der Getriebeschnecke wird durch einen Bewegungssensor (Verschiebungssensor), beispielsweise ein Piezoelement, erfaßt. In jedem Fall sind also zumindest ein Drehzahlsensor und ein Bewegungssensor nötig.

Es besteht auch die Möglichkeit, die Motordrehzahl ohne Sensoren zu erfassen, indem die Stromripple des Motorstroms ausgewertet werden ("Ripple Count"-Verfahren). Bei der Drehung von Gleichstrommotoren ist aufgrund der Spannungsinduktion dem Gleichstrom, der dem Motor zugeführt wird, ein hochfrequentes Signal (Stromripple) überlagert, dessen Frequenz von der Motordrehzahl abhängt. Die Stromripple bilden sich in Folge der periodischen Änderung des wirksamen elektrischen Widerstands und der Induktivität durch den Übergang der Kohlebürsten des Gleichstrommotors beim Gleiten über die Kommutatorlamellen. Der Stromripple zeigt somit den Übergang der Kohlebürste von einer Kommutatorlamelle zur nächsten an und liefert so eine Information über den Winkel des Ankers. Durch Vorschaltung von Filtern des gemessenen Stromes können Störungen unterdrückt werden. Aus dem gefilterten Signal werden die Impulse extrahiert und gezählt ("Ripple Count"). Die Impulse liefern inkrementelle Winkelinformationen. Kritisch ist beim "Ripple Count"-Verfahren jedoch eine starke Änderung in der Bestromung, wie sie sich beim Anfahren des Motors ergibt. Dann sind die Stromripple aus dem Messignal nicht mehr deutlich zu extrahieren, und die Drehzahl kann dann nicht bestimmt werden.

Darstellung der Erfindung

Mit der erfindungsgemäß vorgeschlagenen Lösung können zur Drehwinkel- und Drehzahlerfassung an einer Getriebe-Antriebseinheit mit Gleichstrommotor, die Drehwinkellage und die Drehrichtung durch Kopplung von Winkelsignalen, die mit einem Sensorelement erfaßt werden und solchen Winkelsignalen, die gemäß des Ripple Count-Verfahrens aus der Zählung von Übergängen von Kommutierungsbereich zu Kommutierungsbereich eines Kommutators herrühren und eine Information über die Winkellage der Antriebswelle des Gleichstrommotors liefern, ergänzt werden. Das Sensorelement wird bevorzugt als magnetoresistiver Sensor ausgebildet (AMR-Sensor). Dieses Sensorelement wird an einer An oder Abtriebskomponente der Getriebe-Antriebseinheit angebracht.

Durch die kombinierte Auswertung zweier Winkelsignale, von denen eines mittels eines AMR-Sensors und das andere durch die Auswertung der über ein Ripple Count-Verfahren erhaltenen Impulse erfolgt, ist eine sehr hohe Auflösung für die Messung des Drehwinkels und der Drehzahl der Getriebeelemente erzielbar, insbesondere bei niedrigen Drehzahlen und beim Anfahren des Motors. Damit lassen sich die Nachteile, die bei alleinigem Einsatz des "Ripple Count"-Verfahrens auftreten, wie die Unmöglichkeit, die Drehzahl bei starker Änderung in der Bestromung, wie beispielsweise beim Anfahren, zu bestimmen, vermeiden. Gleichzeitig wird die nötige Auflösung für das vom magnetoresistiven Sensor gelieferte Signal verringert, so daß ein A/D-Wandler geringerer Wortbreite eingesetzt werden kann.

Der magnetisierbare Bereich an einer Getriebekomponente dient als Positionsgeber für den magnetoresistiven Sensor (AMR-Sensor). Vorteilhafterweise wird ein zweipoliger Magnet eingesetzt. Unter einem zweipoligen Magneten wird auch ein mindestens zweipolig magnetisiertes Material verstanden. Bevorzugt wird Plastoferrit eingesetzt.

Bevorzugt wird der magnetisierbare Bereich im Zentrum einer Antriebs- oder Abtriebskomponente angebracht, derart, daß das Zentrum des magnetisierbaren Bereiches möglichst genau mit der Rotationsachse dieses Bauteiles übereinstimmt. Besonders bevorzugt stellt eines der beiden Getriebeelemente, das Antriebs- oder das Abtriebsrad den Rotationskörper dar, der den magnetisierbaren Bereich im Zentrum enthält, dessen Drehwinkel und dessen Drehzahl bestimmt werden soll. Die Abtriebskomponente der Getriebe-Antriebseinheit kann beispielsweise als ein Schneckenrad ausgebildet sein. Die Sensoranordnung kann prinzipiell an jeder Getriebebauart eingesetzt werden, welche auf der Abtriebsseite einer Rotationsbewegung ausführt, so zum Beispiel als Stirnradgetriebe, als Viergelenkgetriebe, Kurbelgetriebe und dergleichen mehr. Bei selbsthemmendem Getriebe sind die Rotationsachsen der Getriebekomponenten in einem Winkel von 90° zueinander angeordnet.

Bei dem magnetoresistiven Sensor handelt es sich insbesondere um einen anisotrop magnetoresistiven Sensor (AMR-Sensor). Anstelle von magnetoresistiven Sensoren (AMR-Sensoren) können auch GMR-Sensoren eingesetzt werden.

Zur Winkelerfassung einer angetriebenen Getriebekomponente wird der magnetoresistive Sensor ortsfest gegenüber dem fest mit der Getriebekomponente verbundenen magnetisierbaren Bereich angeordnet, d.h. gegenüber der Rotationsachse der Getriebekomponente, da das Magnetfeld dort für den Sensor am stärksten ist.

Unterliegt ein AMR-Sensor dem Einfluss eines Magnetfeldes, so ändert sich sein elektrischer Widerstand in Abhängigkeit von der Orientierung des Magnetfeldes (AMR-Effekt), hier in Abhängigkeit von der Winkelstellung der Getriebekomponente, in dessen Zentrum der Magnet angebracht ist. Da AMR-Sensoren ein lageabhängiges Signal liefern und die Erkennung der Drehrichtung ermöglichen, können sie als Absolutwertgeber eingesetzt werden. AMR-Sensoren liefern analoge Winkelsignale, was eine genauere Auflösung ermöglicht als die Auswertung der von Hall-Sensoren gelieferten Signalen. Dies beruht darauf, dass bei einem System aus Ringmagnet und Hall-Sensor nur ein Wechsel der Polarität, also die Umpolung eines Magnetfeldes, detektiert werden kann, und nicht die direkte Ausrichtung des magnetischen Feldes wie mit AMR-Sensoren.

Die analogen Winkelsignale der AMR-Sensoren werden mit Hilfe eines Analog-Digital-Wandlers (A/D-Wandlers) in digitale Signale umgewandelt. Die Bestimmung der Drehzahl erfolgt durch Differentiation dieser berechneten digitalen Signale. Die minimal auflösbare Drehzahl des elektrischen Antriebes bzw. die Quantisierung der Drehzahl kann gemäß der nachfolgend wiedergegebenen Beziehung erfolgen:

$$n_{min} = \frac{0,5}{2^n \cdot T_s} \text{ mit :}$$

n: Anzahl der Bits eines A/D-Wandlers (Wortbreite)
$T_s$: Abtastzeit

Die oben angegebene Beziehung gilt für solche AMR-Sensoren, deren Winkelsignal sich nach 180° wiederholt. Bei einer typischen Anwendung, wie zum Beispiel der Regelung eines Wischermotors mit einer abtriebseitigen Drehzahl von maximal 60 Umdrehungen/min und einer Abtastzeit von $T_s$ von etwa 3 ms gilt unter Voraussetzung des Einsatzes eines 16 Bit-Wandlers, daß eine Auflösung von 0,15 U/min erhalten wird, bei einem 14 Bit-Wandler kann eine Auflösung von 0,61 U/min erzielt werden. Im ersten dargestellten Fall unter Einsatz eines 16 Bit-Wandlers könnte der gesamte Geschwindigkeitsbereich auf etwa 400 Werte abgebildet werden, was bereits das untere Limit für eine sinnvolle Regelung darstellt. Im Falle des Einsatzes eines 14 Bit-Wandlers ließe sich der gesamte Geschwindigkeitsbereich auf lediglich 100 Werte abbilden, so daß eine Geschwindigkeitsregelung kaum noch sinnvoll durchzuführen ist.

Erfindungsgemäß ist die Auswertung der Signale des AMR-Sensors mit der Auswertung weiterer Winkelsignale gekoppelt. Die weiteren Winkelsignale werden - wie erwähnt - durch eine Messung der periodischen Schwankungen des Motorstromes, der sogenannten Stromripple ("Ripple Count"-Verfahren), oder unter Einsatz eines Hall-Sensors ermittelt.

Ein auf einem Schneckenrad - um ein Beispiel zu nennen - angeordneter AMR-Sensor vermag die absolute Position des Abtriebsbauelementes zu liefern. Für eine Positions- bzw. Lageregelung ist ein Meßwert der Abtriebsposition bzw. des Abtriebswinkels besser geeignet, weil sich durch die Zuordnung des Sensors in großer Nähe zum zu verstellenden Teil genauere Meßwerte ermitteln lassen. So sind zum Beispiel Effekte wie auftretendes Spiel durch den AMR-Sensor erfaßbar, die bei einer Winkelerfassung, die an der Motorwelle des elektrischen Antriebes erfolgt, nicht ohne weiteres erfaßt werden können.

Eine Messung der periodischen Schwankungen im Motorstrom ("Ripple Count"-Verfahren) kann beispielsweise durch eine H-Brückenschaltung, welche den Gleichstrommotor ansteuert und vier Schaltelemente aufweist, erfolgen. Bei den Schaltelementen handelt es sich um elektronische Halbleiterschaltelemente, insbesondere um bipolare Transistoren, Feldeffekt-Transistoren, Metal-Oxid-Semiconductor-Feldeffekt-Transistoren (MOSFETs), IGBT-Transistoren und IGCT-Transistoren.

Die vier Schaltelemente sind paarweise zusammengefaßt. Das eine Schaltelementpaar hat die Schaltung auf Low-Side (Masse), das andere hat die Schaltung auf High-Side (Potential). Die Ansteuerung des Gleichstrommotors wird mit einer Pulsweitenmodulation (PWM) vorgenommen. Bei einer getakteten Ansteuerung eines Schaltelementpaares werden die Drain-Source-Spannungen $U_1$ und $U_2$ des anderen Schaltelementpaares ermittelt. Abhängig von einer positiven oder negativen Bestromung wird jeweils nur eine der beiden Meßspannungen $U_1$ und $U_2$ ausgewertet. Da die gemessene Spannung ein Maß für den Motorstrom ist, bilden sich die Stromripple in der gemessenen Spannung ab. Vorteilhafterweise wird der gemessene Strom bzw. die gemessene Spannung hochgefiltert, wodurch Störungen unterdrückt werden können. Hierzu kann zum Beispiel in vorteilhafter Weise ein Bandpaßfilter eingesetzt werden, welcher nur diejenigen Frequenzen passieren läßt, die zwischen der maximalen Kommutierungsfrequenz und der minimalen Kommutierungsfrequenz liegen. Danach kann sich ein Schwellwertvergleich anschließen. Die durch den Schwellwertvergleich ermittelten Ereignisse werden gezählt, wobei auch die Zeit zwischen einer definierbaren Anzahl von Ereignissen erfaßt werden kann.

Aus dem derart aufbereiteten Signal werden Impulse extrahiert und gezählt ("Ripple Count"). Die Impulse liefern inkrementelle Winkelinformationen, aus deren Ableitung die Drehzahl berechnet werden kann.

Vorteilhaft ist hierbei, daß es unerheblich ist, ob sich der Durchlaßwiderstand der Schaltelemente langsam ändert (zum Beispiel temperaturbedingt) oder der genaue quantitative Bezug zu dem Motorstrom bekannt ist. Denn zur Auswertung der Stromripple ist es lediglich nötig, den qualitativen Verlauf des Stromes zu kennen.

Der besondere Vorteil des "Ripple Count"-Verfahrens liegt darin, daß die Signale vor dem Getriebe erzeugt und gemessen werden. Dies ermöglicht eine sehr hohe Auflösung, da die Fertigungstoleranzen der Spritzgußteile des Getriebes nicht berücksichtigt werden müssen.

Erfindungsgemäß werden beide Messprinzipien, die Signalerfassung durch den magnetoresistiven Sensor (AMR-Sensor) und das "Ripple Count"-Verfahren miteinander kombiniert. Dabei wird das Signal des AMR-Sensors als absolutes Lagesignal ausgewertet und zur Erkennung der Drehrichtung herangezogen. Ferner wird das Signal des AMR-Sensors besonders bei hohen Drehzahlen zur Drehzahlbestimmung verwendet. Die Auswertung der Stromripple ("Ripple Count"-Verfahren) liefert pro Umdrehung des Kommutators und damit der Ankerwelle mehrere Impulse, und zwar je Kommutierungsbereich einen Impuls. Weil die Signale vor der Getriebeübersetzung erzeugt werden, erzielt man für die Messung des Abtriebwinkels nach dem Getriebe eine sehr hohe Auflösung. Die Signale des AMR-Sensors werden so durch die aus den Stromripple erhaltene Winkelinformation ergänzt, wodurch die Toleranzanforderungen an den AMR-Sensor verringert und die Gesamt-Auflösung insgesamt bzw. die Genauigkeit des Winkelsignals erhöht wird.

Die Drehzahlberechnung bei Einsatz eines AMR-Sensors unter Heranziehung des Ripple Count-Verfahrens und eines Hall-Sensors ergibt sich jeweils nach dem gleichen Zusammenhang gemäß:

$$n = \frac{\Delta \varphi}{\Delta t}$$

Bei AMR-Sensoren ist die Abtastzeit ($\Delta t$) in der Regel fest vorgegeben, wobei sich der Wert $\Delta \varphi$ aus der Anzahl der Winkelinkremente ergibt. Beim Ripple Count-Verfahren/Hall-Sensor-Einsatz ist hingegen $\Delta \varphi$ eine feste Größe und entspricht dem Winkel zwischen den Hall-Signalen bzw. zwischen dem Auftreten zweier Ripple Count-Ereignisse. Ferner hängt die Größe $\Delta \varphi$ von der Anzahl der eingesetzten Hall-Sensoren und der Anzahl der Pole eines Ringmagneten bzw. von der Anzahl der Kommutierungsbereiche eines Kommutators ab. Die Größe $\Delta t$ ist variabel. Da die Zeitzählung üblicherweise über Auswertung eines Timers erfolgt und hierbei ein interner, sehr kurzer Takt des eingesetzten Mikrocontrollers ($\mu$C) die Basis darstellt, liegt die Anzahl der Zeitinkremente zwischen zwei Ereignissen sehr hoch, so daß die Ungenauigkeiten gering sind. Das Zeitzählverfahren ist insbesondere bei geringen Geschwindigkeiten günstig, da die Größe $\Delta t$ in diesem Falle große Werte annimmt. Das Winkelzählverhalten (Einsatz AMR-Sensor) liefert hier ungünstigere Ergebnisse, da die Anzahl der Winkelinkremente pro Zeiteinheit geringer wird, d.h. das Resultat mit Ungenauigkeiten behaftet sein wird. Die Genauigkeit des Winkelzählverfahrens steigt mit zunehmender Drehzahl momentan an, während die Genauigkeit des Zeitzählverfahrens absinkt. Mit der erfmdungsgemäßen Kombination lassen sich hingegen die Vorteile des Ripple Count-Verfahrens und die eines AMR-Sensors entsprechend der auftretenden Drehzahlbereiche miteinander kombinieren, so daß in den kritischen Drehzahlbereichen, d.h. niedriger Drehzahl, das Zeitzählverfahren (Ripple Count) angewendet wird, während bei hohen Drehzahlen aufgrund der hohen Anzahl von erfaßten Winkelinkrementen die Genauigkeit des Winkelzählverfahrens (AMR-Sensor) ansteigt.

Insbesondere für niedrige Drehzahlen ist durch die erfindungsgemäße Kombination der Auswertung der Signale des AMR-Sensors mit dem "Ripple Count"-Verfahren der Auflösungsbereich erweitert. Ebenso ist die nötige Auflösung des Analog-Digital-Wandlers (A/D-Wandlers) für das AMR-Signal (Bitbreite) verringert.

Zusätzlich können die Stromripple herangezogen werden, um die Ungenauigkeiten des AMR-Sensors auszugleichen. Insbesondere kann dies in einer "Einlernphase" vorgenommen werden, in der die Impulse aus dem "Ripple Count" als Referenz verwertet werden. Der Signalverlauf des AMR-Sensors zur Bestimmung der absoluten Position kann als Kennfeld abgelegt werden, oder aber man paßt eine Berechnungsformel anhand von angenäherten Verläufen (z. B. Spline-Funktionen) den tatsächlichen Gegebenheiten an.

Im Fall des Anfahrens, d.h. bei starker Bestromung, erfolgt die Bestimmung des Drehwinkels und damit auch der Drehzahl wiederum über den AMR-Sensor, da dieser vom Motorstrom unabhängig ist, die starke Änderung der Bestromung also keinen Einfluss auf ihn hat, während hier mit dem "Ripple Count"-Verfahren aus den vorstehend genannten Gründen keine Drehzahlbestimmung erfolgen kann.

Durch die erfindungsgemäße Getriebe-Antriebseinheit läßt sich letztendlich die Position eines durch einen Gleichstrommotor angetriebenen Stellteils des Kraftfahrzeugs mit hoher Auflösung und Genauigkeit ermitteln.

Zeichnung

Anhand der Zeichnung wird die Erfindung nachstehend näher erläutert.

Es zeigt:

Figur 1　　eine Getriebe-Antriebseinheit mit erfindungsgemäßer Sensoranordnung,

Figur 2　　eine Signalauswertung mit Endstufentreiber, der einer elektrisch angetriebenen Getriebeeinheit zugeordnet ist und

Figur 3　　eine Getriebeeinheit mit Signalauswertung und Endstufentreiber sowie einen einem Ringmagneten zugeordneten Hall-Sensor.

Ausführungsvarianten

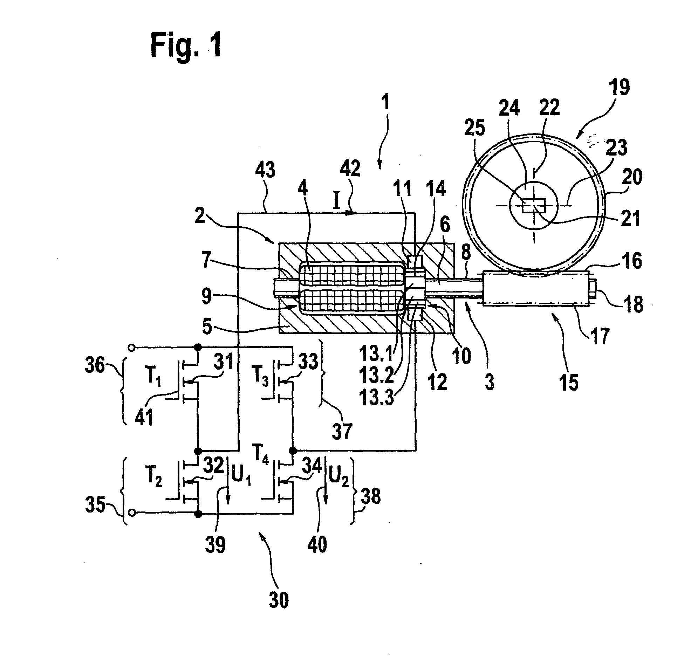

Die in Figur 1 dargestellte Ausführungsvariante der Getriebe-Antriebseinheit 1 mit erfindungsgemäßer Sensoranordnung weist einen Gleichstrommotor 2, ein Antriebselement 15, ein angetriebenes Abtriebselement 19 und eine H-Brückenschaltung 30 auf. Der Gleichstrommotor 2 wird mit der H-Brückenschaltung 30 angesteuert. Durch den Gleichstrommotor 2 wird das Antriebselement 15 angetrieben, welches wiederum das Abtriebselement 19 antreibt.

Der Gleichstrommotor 2 weist folgende Elemente auf: einen Läufer 4, welcher in einem Stator 5 aufgenommen ist, eine Wicklung 9 und einen Kommutator 10, welcher Kommutierungsbereiche 13.1, 13.2, 13.3 sowie dazwischenliegende Lamellentrennungen 14 aufweist, zwei Kohlebürsten 11 und 12, welche den Kommutierungsbereichen 13.1, 13.2, 13.3 zugeordnet sind sowie eine erste Lagerstelle 7 und eine zweite Lagerstelle 8 für die Antriebswelle 3 der Getriebe-Antriebseinheit 1.

Das Antriebselement 15 des Gleichstrommotors 2 ist in der in Figur 1 gezeigten Ausführungsvariante als eine auf einer Ankerwelle 3 eines Gleichstrommotors 2 angeordnete Antriebsschnecke 16 ausgebildet.

In Figur 1 sind das freie Ende 18 der Ankerwelle 3, sowie der Teilkreisdurchmesser 17 der Antriebsschnecke 16 dargestellt. Das Antriebselement 15 treibt wiederum das Abtriebselement 19 an. Das Abtriebselement 19 ist hier als Abtriebsrad, insbesondere als Schnekkenrad, ausgebildet.

In der in Figur 1 dargestellten Ausführungsvariante ist im Abtriebselement 19 der Getriebe-Abtriebseinheit 1 ein magnetisierbarer Bereich 24 zugeordnet. In dieser Ausführungsvariante ist der magnetisierbare Bereich 24 auf dem Abtriebselement 19 angebracht, welches seinerseits über ein Antriebselement 15 angetrieben wird, welches auf der Ankerwelle 3 des Gleichstrommotors 2 angeordnet ist.

Der magnetisierbare Bereich 24, der insbesondere als ein zweipoliger Magnet ausgebildet sein kann, ist auf dem Abtriebselement 19 angebracht. Hierbei stimmt - wie in Figur 1 gezeigt - das Zentrum des positionsgebenden magnetisierbaren Bereiches 24 mit der Rotationsachse 21 des Abtriebselementes 19 überein. In Figur 1 abgebildet ist auch der Teilkreisdurchmesser 20 des Abtriebselementes 19, sowie eine Vertikalachse 22 und eine Horizontalachse 23 des magnetisierbaren Bereiches 24.

Das Sensorelement 25, welches die Signale des positionsgebenden magnetisierbaren Bereiches 24 detektiert, ist ortsfest oberhalb des magnetisierbaren Bereiches 24 angebracht. Bevorzugt wird als Sensorelement 25 ein anisotrop magnetoresistiver Sensor (AMR-Sensor) eingesetzt.

Die den Gleichstrommotor 2 steuernde H-Brückenschaltung 30 weist vier Schaltelemente 31, 32, 33 und 34 ($T_1$, $T_2$, $T_3$, $T_4$) auf. Bei den Schaltelementen 31, 32, 33 und 34 handelt es sich um elektronische Halbleiterschaltelemente. In der hier gezeigten Ausführungsform handelt es sich um Metal-Oxid-Semiconductor-Feldeffekt-Transistoren (MOSFETs).

Die vier Schaltelemente 31, 32, 33 und 34 der H-Brückenschaltung 30 sind paarweise zusammengefaßt, wobei das Schaltelement 31 ($T_1$) und das Schaltelement 33 ($T_3$) jeweils ein Schaltelementpaar 37 und das Schaltelement 32 ($T_2$) und das Schaltelement 34 ($T_4$) das zweite Schaltelementpaar 38 bilden. Das Schaltelementpaar 37 hat die Schaltung 36 auf Low-Side (Masse). Das Schaltelementpaar 38 hat die Schaltung 35 auf High-Side (Potential). Die Ansteuerung des Gleichstrommotors 2 wird mit einer Pulsweitenmodulation (PWM) vorgenommen. Hierbei werden bei einer Taktung des oberen Schaltelementpaares 37 Drain-Source-Spannungen $U_1$ und $U_2$ des unteren Schaltelementpaares 38 gemessen. Wird das untere Schaltelementpaar 38 getaktet angesteuert, so werden die Drain-Source-Spannungen des oberen Schaltelementpaares 37 gemessen. Bei einer positiven Bestromung wird nur $U_1$ ausgewertet, die erste Messspannung 39 und bei einer negativen Bestromung nur $U_2$, die zweite Messspannung 40.

Im Betriebszustand der erfindungsgemäßen Getriebe-Antriebseinheit 1 gemäß Figur 1 wird dem Gleichstrommotor 2 über den Zuleitungsabschnitt 43 ein Motorstrom 42 (I) zugeführt. Der Gleichstrom 42 bewirkt eine Rotationsbewegung des Läufers 4 mit der Wicklung 9 und der an der ersten und zweiten Lagerstelle 7/8 gelagerten Antriebswelle 3 um die Rotationsachse im Stator 5. Der Kommutator 10 wird bei einer solchen Rotationsbewegung mitbewegt, während die erste und die zweite Kohlebürste 11 und 12 ortsfest fixiert sind. Durch die Rotationsbewegung wird eine Spannung induziert, die zu periodischen Schwankungen im Motorstrom I (Bezugszeichen 42) führt. Bei einer Rotationsbewegung des Kommutators 10 gleiten die beiden Kohlebürsten 11 und 12 abwechselnd über die Kommutierungsbereiche 13.1, 13.2, 13.3 usw. und die dazwischenliegenden Lamellentrennungen 14. Hierdurch ändert sich periodisch der wirksame elektrische Widerstand und die Induktivität. Infolge dessen sind die periodischen Schwankungen des Motorstroms I (Bezugszeichen 42) im Rückleitungsabschnitt 44, die von der Spannungsinduktion bei der Rotationsbewegung des Läufers 4 herrühren, von einem hochfrequenten Signal (Stromripple) überlagert. Die Frequenz dieses Stromripples hängt von der Motordrehzahl ab. Die Übergänge der beiden Kohlenbürsten 11 und 12 von einem Kommutierungsbereich 13.1, 13.2, 13.3 zum nächsten liefern eine Information über den Drehwinkel des Kommutators 10 und den Drehwinkel der Ankerwelle 3.

Vorteilhafterweise werden dem gemessenen Strom bzw. der gemessenen Spannung Filter vorgeschaltet, wodurch Störungen ausgefiltert werden können. Aus dem aufbereiteten Signal werden Impulse extrahiert und gezählt ("Ripple Count"). Die Impulse liefern inkrementelle Winkelinformationen, aus deren Ableitung die Drehzahl des Antriebselements 15 berechnet werden kann.

Es ist nunmehr unerheblich, ob sich der Durchlaßwiderstand aller oder einzelner Schaltelemente 31, 32, 33, 34 der Schaltung 30 langsam ändert (zum Beispiel temperaturbedingt) oder der genaue quantitative Bezug zu dem Motorstrom I (Bezugszeichen 42) bekannt ist. Zur Auswertung der Stromripple ist es erforderlich, den qualitativen Verlauf des Motorstromes I (Bezugszeichen 42) zu kennen. Der besondere Vorteil des "Ripple Count"-Verfahrens liegt darin, daß die Signale vor dem Getriebe 15/19 erzeugt und gemessen werden. Dies ermöglicht eine sehr hohe Auflösung, da die Fertigungstoleranzen der Spritzgußteile des Getriebes 15/19 nicht berücksichtigt werden müssen.

Durch die Drehbewegung des Kommutators 10 wird auch das Antriebselement 15 und das Abtriebselement 19 bewegt, d.h., daß sich der auf dem Abtriebselement 19 angebrachte magnetisierbare Bereich 24 ebenfalls dreht. In Abhängigkeit von der Orientierung des Magnetfeldes des magnetisierbaren Bereiches 24 ändert sich der elektrische Widerstand des AMR-Sensors 25, der ortsfest über dem magnetisierbaren Bereich 24 angebracht ist und somit dem Einfluß des Magnetfelds des magnetisierbaren Bereiches 24 unterliegt. Mit dem AMR-Sensorelement 25 kann die direkte Ausrichtung des magnetischen Feldes und damit auch die Winkelstellung des Abtriebselements 19, in dessen Zentrum der magnetisierbare Bereich 24 angebracht ist, bestimmt werden.

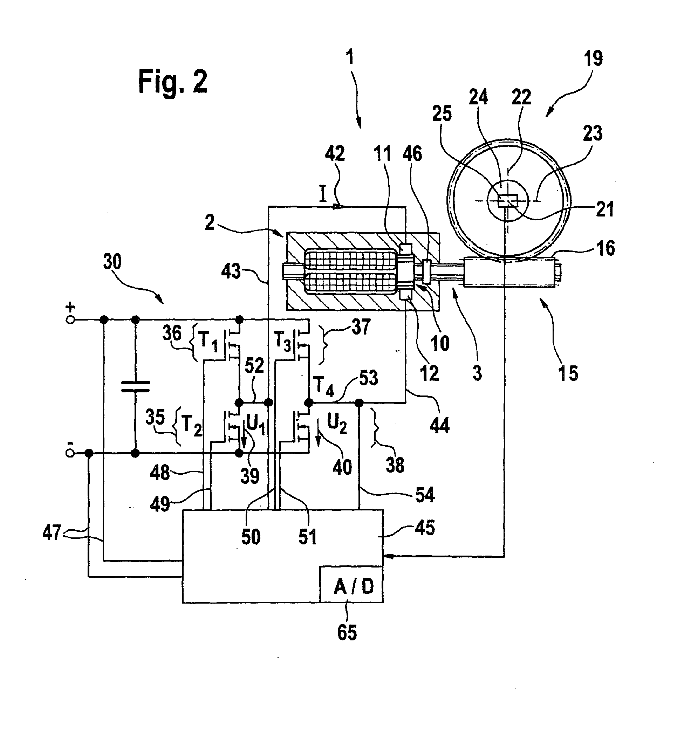

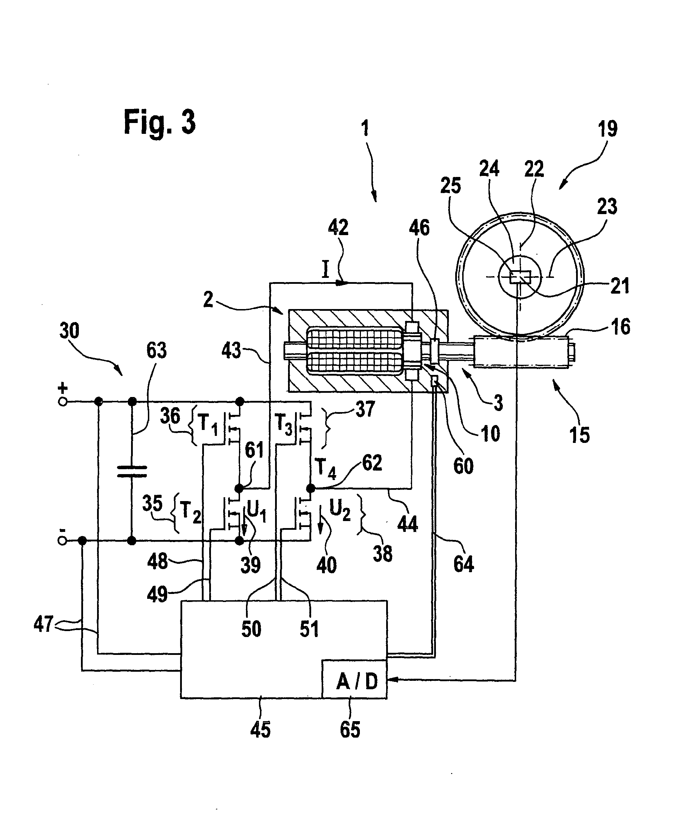

AMR-Sensorelemente 25 liefern analoge Winkelsignale, was eine genaue Auflösung ermöglicht, die mit Hilfe eines Analog-Digital-Wandlers (A/D-Wandlers), vgl. Figuren 2 und 3, in digitale Signale umgewandelt werden. Die Bestimmung der Drehzahl erfolgt dann durch Differentiation der berechneten digitalen Signale.

Da mit AMR-Sensoren die direkte Ausrichtung des magnetischen Feldes ermittelt werden kann, können AMR-Sensoren als Absolutwertgeber zur Bestimmung der Drehrichtung eingesetzt werden. Die Drehzahlen hängen vom jeweiligen Anwendungsfall der Getriebe-Antriebseinheit 1 ab und sind abhängig von der Anzahl der Kommutierungsbereiche 13.1, 13.2, 13.3, der Abtastzeit, der Bitbreite des A/D-Wandlers 65 und des Drehzahlbereiches der jeweils vorliegenden Applikation.

In einer in Fig. 2 dargestellten signalverarbeitenden Anordnung 45 werden die aus dem AMR-Sensor 25 erhaltenen Informationen über die Winkelstellung des Abtriebselementes 19 mit den aus der Auswertung der Stromripple ("Ripple Count"-Verfahren) erhaltenen Informationen über die Winkelstellung des Kommutators 10 bzw. der Ankerwelle 3 kombiniert ausgewertet. Hierdurch läßt sich die Position eines durch den Gleichstrommotor 2 angetriebenen Stellteils, welches durch das Abtriebselement 19 bewegt wird, eines Kraftfahrzeugs (in Fig. 1 nicht dargestellt) mit hoher Auflösung und Genauigkeit ermitteln.

In einer weiteren - nicht dargestellten - Ausführungsform ist das Antriebselement als ein auf einer Ankerwelle 3 angeordnetes Ritzel ausgebildet. Im Betriebszustand einer derartigen Getriebe-Antriebseinheit 1 mit dem Ritzel wird ebenfalls einem Gleichstrommotor 2 über einen Zuleitungsabschnitt 43 ein Motorstrom 42 (I) zugeführt. Die Bestromung bewirkt eine Rotationsbewegung der an einer ersten Lagerstelle 7 und an einer zweiten Lagerstelle 8 gelagerten Ankerwelle 3 um deren Rotationsachse. Der Kommutator 10 wird bei dieser Rotationsbewegung bewegt, während eine erste und eine zweite Kohlebürste 11 und 12 ortsfest fixiert sind. Bei der Rotationsbewegung des Kommutators 10 gleiten die beiden Kohlebürsten 11 und 12 abwechselnd über die Kommutierungsbereiche 13.1, 13.2, 13.3 usw. und dazwischenliegenden Lamellentrennungen 14. Hierdurch ändert sich periodisch der wirksame elektrische Widerstand und die Induktivität. Dadurch sind die periodischen Schwankungen des Motorstroms I (Bezugszeichen 42) im Rückleitungsabschnitt 44, die von der Spannungsinduktion bei der Rotationsbewegung herrühren, als hochfrequente Signale (Stromripple) erfaßbar. Der Stromripple zeigt den Übergang der beiden Kohlenbürsten 11 und 12 von einem Kommutierungsbereich zur nächsten an und liefert so eine Information über den Winkel des Kommutators 10 und über den Winkel des zahnradgetriebenen Ritzels.

Aus dem - vorteilhafterweise gefilterten - Signal werden die Impulse extrahiert und gezählt ("Ripple Count"). Die Impulse liefern inkrementelle Winkelinformationen, aus deren Ableitung die Drehzahl des zahnradgetriebenen Ritzels berechnet werden kann. Da das zahnradgetriebene Ritzel das Abtriebselement 19 antreibt, werden dadurch auch Informationen über die Winkelstellung des Abtriebselements 19 gewonnen.

Auch hier liegt der besondere Vorteil des "Ripple Count"-Verfahrens darin, daß die Signale vor dem Getriebe 15/19 erzeugt und gemessen werden. Dies ermöglicht eine sehr hohe Auflösung, da die Fertigungstoleranzen der Spritzgußteile des Getriebes 15/19 nicht berücksichtigt werden müssen.

Durch die Bewegung des zahnradgetriebenen Ritzels wird auch das Abtriebselement 19 und ein darauf angebrachter magnetisierbarer Bereich 24 bewegt, so daß sich in Abhängigkeit von der Orientierung des Magnetfeldes des magnetisierbaren Bereiches 24 der elektrische Widerstand eines ortsfest über dem magnetisierbaren Bereich 24 angebrachten AMR-Sensors 25 ändert. Mit dem AMR-Sensor 25 kann die direkte Ausrichtung des magnetischen Feldes und damit auch die Winkelstellung des Abtriebselements 19 bestimmt werden.

In einer signalverarbeitenden Anordnung 45 (vgl. Figur 2) werden die aus dem AMR-Sensor 25 erhaltenen Informationen über die Winkelstellung des Abtriebselements 19 mit den aus der Auswertung der Stromripple ("Ripple Count"-Verfahren) erhaltenen Informationen über die Winkelstellung des zahnradgetriebenen Ritzels kombiniert ausgewertet. Hierdurch läßt sich die Position eines durch den Gleichstrommotor 2 angetriebenen Stellteils des Kraftfahrzeugs mit hoher Auflösung und Genauigkeit ermitteln.

In anderen erfindungsgemäßen Ausführungsformen sind die vier Schaltelemente der H-Brückenschaltung nicht als MOS-FET's ausgebildet, sondern als bipolare Transistoren, IGBT-Transistoren oder IGCT-Transistoren.

Figur 2 zeigt eine der Getriebe-Antriebseinheit zugeordnete Signalauswertungseinheit, die Endstufentreiber beinhaltet.

Die Getriebe-Antriebseinheit 1 umfasst eine Signalauswertungseinheit 45, die Endstufentreiber umfasst. Die einzelnen in der Signalauswertungseinheit 45 angeordneten Endstufentreiber stehen über Ansteuerleitungen 48, 49, 50, 51 jeweils mit den in der Schaltung 30 angeordneten Schaltelementen 31, 32, 33, 34 in Verbindung. Die Signalauswertungseinheit 45 selbst ist über Anschlußleitungen 47 mit Potential bzw. mit Masse verbunden. In der Auswertungseinheit 45 ist ein A/D-Wandler 65 aufgenommen, dem die Eingangssignale des dem Abtriebselement 19 zugeordneten AMR-Sensorelement 25 aufgegeben werden. Das bevorzugt als AMR-Sensor ausgebildete Sensorelement 25 liefert ein analoges Winkelsignal, wodurch sich eine hochgenaue Auflösung erzielen lässt. Ferner steht das Winkelsignal des als AMR-Sensor ausgebildeten Sensorelementes 25 in einem eindeutigen Zusammenhang zum Winkel des Abtriebselementes 19 der Getriebe-Antriebseinheit 1. Aus dem vom AMR-Sensorelement 25 aufgenommenen Winkelsignal kann eindeutig auf die Winkelstellung des Abtriebselementes 19 zurückgeschlossen werden. Aufgrund des eindeutigen Zusammenhangs zwischen dem Winkelsignal des AMR-Sensorelementes 25 und dem Winkel des Abtriebselementes 19 kann aus dem Winkelsignal die Erkennung der Drehrichtung des Abtriebselementes 19 erfolgen. Die Drehzahl des Abtriebselementes 19 kann durch Differentiation des berechneten Winkels des aus dem Winkel-Signal-Sensorelementes 5 berechneten Winkels ermittelt werden. Dass dem A/D-Wandler 65 zugeführte Winkelsignal des als AMR-Sensor ausgebildeten Sensorelementes 25 wird insbesondere bei hohen Drehzahlen der Getriebe-Antriebseinheit 1 zur Bestimmung der Drehzahl derselben verwendet.

Im Unterschied zur Beschaltung des Gleichstrommotors 2 gemäß der Darstellung in Figur 1 sind bei der Ausführungsvariante gemäß Figur 2 im Zuleitungsabschnitt 43 sowie im Rückleitungsabschnitt 44 eine erste Verbindungsleitung 52 bzw. eine zweite Verbindungsleitung 53 aufgenommen. Diese Verbindungsleitungen 52, 53 finden ihre Anschlußpunkte jeweils zwischen zwei Schaltelementen 31 bzw. 32 sowie 33 bzw. 34. Am Rückleitungsabschnitt 44 ist ein Abgriff 54 ausgeführt, der den Rückleitungsabschnitt 44 direkt mit der Signalauswertungseinheit 45 verbindet.

In der Signalauswertungseinheit 45, die den A/D-Wandler 65 umfasst, erfolgt einerseits eine Fassung der Winkelposition des Abtriebselementes 19 aufgrund der Relativbewegung des magnetisierbaren Bereiches 24, oberhalb dessen ortsfest das bevorzugt als AMR-Sensor ausgebildete Sensorelement 25 angeordnet ist. Andererseits wird gemäß des Ripple-Count-Verfahrens eine Messung der ersten Messspannung 39 bzw. der zweiten Messspannung 40 an den unteren Leistungsschaltern 32 bzw. 34 der Schaltung 30 vorgenommen. Bei einer getakteten Ansteuerung des ersten Schaltelementes 31 und des dritten Schaltelementes 33 werden die Drain-Source-Spannungen an dem zweiten Schaltelement 32 und dem vierten Schaltelement 34 gemessen, während bei einer getakteten Ansteuerung der unteren Schaltelemente 32 bzw. 34 die Spannungen an den oberen Schaltern den oberen Schaltelementen 31 bzw. 32 gemessen werden.

Bei einer positiven Bestromung wird lediglich die erste Messspannung 39, bei einer negative Bestromung die zweite Messspannung 40 in der Signalauswerteeinheit 45 ausgewertet. Die gemessenen Spannungen 39 bzw. 40 stellen dabei ein Maß für den Motorstrom 42 dar. Dessen Schwankungen (Strom-Ripple) bilden sich in den gemessenen Spannungen 39 bzw. 40 ab.

Durch den Übergang der Kohlenbürsten 11 bzw. 12 von einem Kommutierungsbereich 13.1 auf den nächsten Kommutierungsbereich 13.2 des Kommutators 10 ändern sich periodisch der wirksame elektrische Widerstand und die Induktivität. Demzufolge bilden sich periodische Schwankungen im Motorstrom 42 aus (Strom-Ripple). Daraus lässt sich eine Information über den Drehwinkel des Läufers 4 und damit der Antriebswelle 3 gewinnen. Das ermittelte bzw. mittelbar über die Spannungsmessung ermittelte Strom-Ripple wird innerhalb der Signalauswertungseinheit 45 aufbereitet. Dazu umfasst die Signalauswerteeinheit 45 ein oder mehrere Filter, durch welche Störungen herausgefiltert werden können. Aus dem entsprechend aufbereiteten Signalen werden Impulse extrahiert und gezählt. Die einzelnen Impulse liefern inkrementelle Winkelinformation, aus deren Ableitung die Drehzahl des Gleichstrommotors 2 der Getriebsantriebseinheit 1 gewonnen werden kann. Die Auswertung des Strom-Ripples pro Umdrehung der den Kommutator 10 aufnehmenden Antriebswelle 3 liefert pro Umdrehung mehrere Impulse, je nach Anzahl der Übergänge von einem Kommutierungsbereich 13.1 auf den nächsten Kommutierungsbereich 13.2 bzw. 13.3., entsprechend der Drehrichtung. Da die den pro Umdrehung aufgenommenen Impulse zugrundeliegenden Signale vor einer Getriebsübersetzung erzeugt werden, die durch das Antriebselement 15 und das Abtriebselement 19 gegeben ist, wird eine sehr hohe Auflösung erzielt, welche einerseits eine Reduzierung der Wortbreite des A/D-Wandlers 65 zur Messung der Winkelsignale des AMR-Sensorelementes 25 erlaubt und andererseits dessen Winkelinformation durch die Drehwinkelinformation der Antriebswelle 3 ergänzt. Die Erzeugung einer zusätzlichen Drehwinkel- bzw. Drehzahlinformation führt zu einer verbesserten Auflösung der Drehzahl besonders im unteren Drehzahlbereich eines Gleichstrommotors 2 einer Getriebe-Antriebseinheit 1.

Die durch die Übergänge der Kohlebürsten 11, 12 von einem Kommutierungsbereich 13.1 in einen benachbarten Kommutierungsbereich 13.2 bzw. 13.3 erhaltenen, in Impulse umgewandelten Winkelsignale können ferner dazu herangezogen werden, um die Ungenauigkeiten der Winkel-Signale des AMR-Sensorelementes 25 auszugleichen. Dies erfolgt bevorzugt in einer Einlernphase, bei der die aus dem Ripple-Count-Verfahren erhaltenen mehreren Impulse pro Umdrehung des Kommutators 10 des Gleichstrommotors 2 als Referenzwerte verwendet werden können. Der Signalverlauf des Winkelsignales, welches über den bevorzugt als AMR-Sensor ausgebildeten Sensorelementes 25 erhalten wird und der der Bestimmung der absoluten Position des Abtriebselementes 19 dient, kann als Kennfeldzusammenhang abgelegt werden. Ferner ist eine Änderung der Berechnungsformel anhand angenäherter Verläufe vornehmbar, die über Spline-Funktionen den tatsächlichen Gegebenheiten angepasst werden können.

In Figur 3 ist eine weitere Ausführungsvariante der erfindungsgemäß vorgeschlagenen Drehwinkel bzw. Drehzahlerfassung einer einen Gleichstromantrieb aufweisenden Getriebe-Antriebseinheit zu entnehmen. Analog zu den Ausführungsvarianten gemäß Figur 1 und 2 ist bei der in Figur 3 dargestellten Ausführungsvariante einer Getriebekomponente in Gestalt eines Abtriebselementes 19 ein magnetisierbarer Bereich 24 zugeordnet, oberhalb dessen sich ein AMR-Sensor als Sensorelement 25 befindet. Das AMR-Sensorelement steht über eine Übertragungsleitung mit einem A/D-Wandler 65 einer Signalauswertungsstufe 45 in Verbindung. Anstelle des Ripple-Count-Verfahrens, bei dem aus der Anzahl der Übergänge der Kohlebürsten 11 bzw. 12 von einem Kommutierungsbereich 13.1 des Kommutators 10 auf den nächsten Kommutierungsbereich 13.2 bzw. 13.3 eine Winkellage der Antriebswelle 3 darstellende Impulse gewonnen werden, lassen sich diese Impulse durch einen Hall-Sensor 60 generieren, welcher einem auf der Antriebswelle 3 angeordneten Ringmagneten 46 zugeordnet ist. Der Hall-Sensor 60, der dem Ringmagneten 46 der Antriebswelle 3 zugeordnet ist, liefert zwar eine geringere Auflösung, verglichen mit dem Sensorelement 25, welches als AMR-Sensor ausgebildet ist; jedoch lässt sich aus einer Kombination eines Hall-Sensors 60 zur Ermittlung der Drehlage der Antriebswelle vor der Getriebeübersetzung, die durch das Antriebselement 15 und das Abtriebselement 19 realisiert wird, in Kombination mit dem Sensorelement 25, welches den magnetisierbaren Bereich 24 zugeordnet ist, ebenfalls eine zusätzliche Drehzahlinformation erzeugen, die zu einer deutlich verbesserten Auflösung der Drehzahl des Gleichstrommotors 2 im unteren Drehzahlbereich herangezogen werden kann.

Bezugszeichenliste

| | |
|---|---|
| 1 | Getriebe-Antriebseinheit |
| 2 | elektrischer Antrieb, Gleichstrommotor |
| 3 | Antriebswelle |
| 4 | Läufer |
| 5 | Stator |
| 6 | Ankerwellenabschnitt |
| 7 | erste Lagerstelle |
| 8 | zweite Lagerstelle |
| 9 | Wicklung |
| 10 | Kommutator |
| 11 | erste Kohlebürste |
| 12 | zweite Kohlebürste |
| 13.1 | erste Kommutatorlamelle |
| 13.2 | zweite Kommutatorlamelle |
| 13.3 | dritte Kommutatorlamelle |
| 14 | Lamellentrennung |
| 15 | Antriebselement, Antriebsrad |
| 16 | Antriebsschnecke |
| 17 | Teilkreisdurchmesser der Antriebsschnecke |
| 18 | freies Ende |
| 19 | getriebenes Antriebselement, Abtriebsrad |
| 20 | Teilkreisdurchmesser des Abtriebsrads |
| 21 | Rotationsachse |
| 22 | Vertikalachse |
| 23 | Horizontalachse |
| 24 | magnetisierbarer Bereich |
| 25 | Sensorelement (AMR) |
| 30 | H-Brückenschaltung |
| 31 | erstes Schaltelement ($T_1$) |
| 32 | zweites Schaltelement ($T_2$) |
| 33 | drittes Schaltelement ($T_3$) |
| 34 | viertes Schaltelement ($T_4$) |
| 35 | Low-Side |
| 36 | High-Side |
| 37 | erstes Schaltelementpaar |
| 38 | zweites Schaltelementpaar |
| 39 | erste Meßspannung |
| 40 | zweite Meßspannung |
| 41 | Transistorbasis |
| 42 | Motorstrom |
| 43 | Zuleitungsabschnitt |
| 44 | Rückleitungsabschnitt |
| 45 | Endstufentreiber/Signalauswertung |
| 46 | Ringmagnet |
| 47 | Anschlüsse |
| 48 | Ansteuerleitung $T_1$ |
| 49 | Ansteuerleitung $T_2$ |
| 50 | Ansteuerleitung $T_3$ |
| 51 | Ansteuerleitung $T_4$ |
| 52 | erste Verbindungsleitung |
| 53 | zweite Verbindungsleitung |
| 54 | Abzweig |
| 60 | Hall-Sensor |
| 61 | Aufschaltung Zuleitungsabschnitt |
| 62 | Aufschaltung Rückleitungsabschnitt |
| 63 | Kondensator |
| 64 | Übertragungsleitung |
| 65 | A/D-Wandler |

**Patentansprüche**

1. Verfahren zur Bestimmung der Drehzahl und des Drehwinkels einer Getriebe-Antriebseinheit (1), die einen Gleichstrommotor (2) umfaßt, welcher ein Antriebselement (15) antreibt, das mit einem Abtriebselement (19) zusammenwirkt sowie eine Signalauswertung (45) umfaßt, mit nachfolgenden Verfahrensschritten:

   a) mit einem Sensorelement (25), welches einem magnetisierbaren Bereich (24) am Abtriebselement (19) zugeordnet ist, wird ein Winkelsignal des Abtriebselementes (19) ermittelt,

b) aus einer Bestimmung von Übergängen zwischen Kommutierungsbereichen (13.1, 13.2, 13.3) eines Kommutators (10) des Gleichstrommotors (2) werden periodische Schwankungen des Motorstromes I (42) vor einem Getriebe, welches das Antriebselement (15) und das Abtriebselement (19) enthält, erfaßt und

c) das dem Drehwinkel des Abtriebselementes (19) entsprechende Winkelsignal des Sensorelementes (25) wird mit einem aus den Übergängen zwischen den Kommutierungsbereichen (13.1, 13.2, 13.2) des Kommutators (10), gewonnenen Signal, welches die Winkellage einer Antriebswelle (3) angibt, zur Erweiterung des Auflösungsbereiches gekoppelt.

2. Verfahren gemäß Anspruch 1, **dadurch gekennzeichnet, daß** die Drehzahl aus dem Winkelsignal des Sensorelementes (25) und die die Übergänge zwischen den Kommutierungsbereichen (13.1, 13.2, 13.3) repräsentierenden Impulsen, die eine inkrementelle Winkelinformation darstellen, durch Differentiation der Winkelinformation ermittelt wird.

3. Verfahren gemäß Anspruch 1, **dadurch gekennzeichnet, daß** das über ein als AMR-Sensor ausgeführtes Sensorelement (25) erfaßte Winkelsignal mittels eines A/D-Wandlers (65) digitalisiert wird.

4. Verfahren gemäß Anspruch 3, **dadurch gekennzeichnet, daß** das als AMR-Sensor ausgebildete Sensorelement (25) als Absolutwertgeber die Drehrichtung eines Abtriebselementes (19) erkannt wird.

5. Verfahren gemäß Anspruch 1, **dadurch gekennzeichnet, daß** die Winkellage der Ankerwelle (3) repräsentierende Impulse, die innerhalb der Signalauswertung (45) aus den Übergängen zwischen den Kommutierungsbereichen (13.1, 13.2, 13.3) repräsentierenden Signalen Impulse extrahiert und gezählt werden, die eine enkrementelle Winkelinformation der Ankerwelle (3) liefern.

6. Verfahren gemäß Anspruch 5, **dadurch gekennzeichnet, daß** in der Signalauswertung (45) pro Umdrehung der Antriebswelle (3) mehrere, den Übergängen zwischen den Kommutierungsbereichen (13.1, 13.2 13.3) entsprechende Impulse bestimmt werden.

7. Verfahren gemäß Anspruch 1, **dadurch gekennzeichnet, daß** die periodischen Schwankungen des Motorstromes I (42) durch Auswertung einer ersten Meßspannung (39) oder einer zweiten Meßspannung (40) bestimmt werden, wobei bei einer positiven Bestromung die erste Meßspannung (39) und bei einer negativen Bestromung die zweite Meßspannung (40) einer Schaltung (30) ausgewertet wird.

8. Verfahren gemäß der Ansprüche 5 und 7, **dadurch gekennzeichnet, daß** die aus den Übergängen zwischen den Kommutierungsbereichen (13.1, 13.2, 13.3) ermittelten, den periodischen Schwankungen des Motorstromes I (42) entsprechenden Impulse zum Ausgleich der Signale des Sensorelementes (25) in einer Einlernphase herangezogen werden, in der den Übergängen der Kommutierungsbereiche (13.1, 13.2, 13.3) entsprechende Signale Referenzsignale darstellen.

9. Verfahren gemäß Anspruch 3, **dadurch gekennzeichnet, daß** der Verlauf der Winkelsignale des als AMR-Sensors ausgeführten Sensorelementes (25) zur Bestimmung einer Absolutposition in einem Kennfeld abgelegt werden.

10. Verfahren zur Bestimmung der Drehzahl des Drehwinkels einer Getriebe-Antriebseinheit (1), die einen Gleichstrommotor (2) umfasst, welcher ein Antriebselement (15) antreibt, das mit einem Abtriebselement (19) zusammenwirkt sowie eine Signalauswertung (45) umfasst, mit nachfolgenden Verfahrensschritten:

a) mit einem Sensorelement (25), welches einem magnetisierbaren Bereich (24) am Abtriebselement (19) zugeordnet ist, wird ein Winkelsignal des Abtriebselementes (19) ermittelt,

b) aus einer Bestimmung der Drehlage eines Ringmagneten (46), dem ein Hall-Sensorelement (60) zugeordnet wird, werden der Drehlage entsprechende Impulse vor einem Getriebe aus einem Antriebselement (15) und einem Abtriebselement (19), generiert und

c) das dem Drehwinkel des Abtriebselementes (19) entsprechende Winkelsignal des Sensorelementes (25) wird mit den aus den Impulsen des Hall-Sensorelementes (60) gewonnenen Signalen, welche die Winkellage einer Antriebswelle (3) angeben zur Erweiterung des Auflösungsbereiches gekoppelt.

11. Vorrichtung zur Bestimmung der Drehzahl des Drehwinkels, insbesondere gemäß des Verfahrens nach Anspruch 1 mit einer Getriebe-Antriebseinheit (1), die einen Gleichstrommotor (2) und eine Signalauswertung (45) umfaßt, eine Antriebswelle (3) des Gleichstrommotors (2), einen Kommutator (10) und ein Antriebselement (15) aufnimmt, welches ein Abtriebselement (19) antreibt, **dadurch gekennzeichnet, daß** einem magnetisierbaren Bereich (24) des Abtriebselementes (19) ein ortsfest angeordnetes Sensorelement (25) zugeordnet ist sowie eine Schaltung (30) vorgesehen ist, welche ansteuerbare Schaltelemente (31, 32, 33, 34) aufweist, an der eine bestromungsabhängige erste Meßspannung (39) oder eine zweite bestromungsabhängige Meßspannung (40) abgreifbar ist.

12. Vorrichtung gemäß Anspruch 11, **dadurch gekennzeichnet, daß** das Sensorelement (25) als anisotroper magnetoresistiver Sensor ausgeführt ist.

13. Vorrichtung gemäß Anspruch 11, **dadurch gekennzeichnet, daß** das Zentrum des magnetisierbaren Bereiches (24) am Abtriebselement (19) mit der Rotationsachse (21) des Abtriebselementes (19) übereinstimmt.

14. Vorrichtung gemäß Anspruch 11, **dadurch gekennzeichnet, daß** der magnetisierbare Bereich (24) ein zweipolig magnetisierbares Material enthält.

15. Vorrichtung gemäß Anspruch 14, **dadurch gekennzeichnet, daß** der magnetisierbare Bereich (24) Plastoferrit enthält.

16. Vorrichtung gemäß Anspruch 11, **dadurch gekennzeichnet, daß** die Schaltung (30) eine H -Brük- kenschaltung ist, deren Schaltelemente (31, 32, 33, 34) als Feldeffekt-Transistoren, MOS-FET's, Bipolartransistoren, IGBT-Transistoren oder IGCT-Transistoren ausgebildet sind.

17. Vorrichtung gemäß Anspruch 11, **dadurch gekennzeichnet, daß** die Schaltelemente (31, 32, 33, 34) der Schaltung (30) paarweise zu zwei Schaltelementepaaren (37, 38) zusammengefaßt sind.

18. Vorrichtung gemäß Anspruch 17, **dadurch gekennzeichnet, daß** bei Taktung eines oberen Schaltelementepaares (37) die Low-Side-Spannung am unteren Schaltelementpaar (38) gemessen wird.

19. Vorrichtung gemäß Anspruch 17, **dadurch gekennzeichnet, daß** bei Taktung des unteren Schaltelementepaares (38) die High-Side-Spannung am oberen Schaltelementpaar (37) gemessen wird.

# Fig. 1

**Fig. 2**

# Fig. 3